# EUROPEAN PATENT APPLICATION

(11) **EP 1 894 466 A2**
(43) Date of publication of application: **05.03.2008**
(21) Application number: 07115445.4
(22) Date of filing: 31.08.2007
(51) Int. Cl.: A01G 9/02

(54) **Pot for growing a plant**

(30) Priority: 31.08.2006 NL 1032398
(71) Applicant: Novabouw, 9090 Melle (BE)
(72) Inventor: Van Helleputte, Gino, 9090, Melle (BE)
(74) Representative: Van Reet, Joseph

(57) **Abstract**

The pot has a bottom (1) and a sidewall (2) connected thereto. The bottom (1) is formed by a substantially central, upwardly narrowing indentation (4) with, around it, a lower bottom part (5) that extends from the central indentation (4) to the sidewall (2). At least 5% of the surface of this lower bottom part (5) is occupied by drainage holes (6). The lower bottom part (5) forms, between the indentation (4) and the sidewall (2), a surface that undulates up and down over substantially its whole width in a direction around the central indentation (4) to form peaks (8), valleys (9) and flanks (10). At least a number of the drainage holes (6) are located in one of said valleys (9) and extend over the two adjacent flanks (10). Because of the quicker formation of smaller drops, the drainage and the ventilation of the pot are promoted.

## Description

The present invention relates to a pot for growing a plant, more particularly a flower pot, wherein said pot comprises a bottom and a sidewall connected thereto, wherein the bottom is formed by an approximately central indentation with, around it, a lower bottom part extending from the central indentation to the sidewall and having a surface of which at least 5% is occupied by drainage holes.

Such pots are known for example from EP-A-1 527 676 and from NL-C-1 018 022. In the pot described in EP-A-1 527 676, the indentation has a height of at least 20% of the height of the pot. The indentation is provided with ventilation holes which ensure a better ventilation of the substrate in the pot, so that after being watered the substrate can better dry up again. A rapid drying of the substrate is important considering that it is generally known to be important for a good growth and health of the plant that the roots receive enough oxygen. For this purpose, the pores of the substrate must be filled mainly with air. Water-filled pores certainly only allow a very limited transport of oxygen, so that, in a substrate saturated with water, the roots will not receive enough oxygen.

This problem is described, for example, in US-A-4 173 097. Herein is indicated the general principle that the water must be able to flow from any position on the bottom of the pot towards drainage holes. In the pot described in US-A-4 173 097 there are, along the sidewall, four indentations in the bottom, which are each provided with ventilation holes to ensure a good ventilation of the substrate. These indentations additionally ensure that the volume of substrate that is frequently saturated with water remains limited while nevertheless maintaining the vertical height needed for root growth. The disadvantage of such a pot is however that most of the water flows towards this wettest part of the substrate, whereby this remains saturated with water even longer and the root growth in this lowest part of the pot will be in practice hindered.

As indicated in the introduction, the present invention thus relates to a different type of pot, namely to a pot as known from EP-A-1 527 676 and NL-C-1 018 022 wherein the bottom shows a central indentation with, around it, a lower bottom part which is provided with drainage holes so that the water only has to move along a minimal distance before it can be drained through one of these holes.

In the pots known from these two patent publications, the drainage holes are located in a circle in the lower bottom part which extends around the central indentation. To promote the drainage of the pot, the bottom of the pot drains in a radial direction towards the drainage holes. The drainage holes themselves are located in a flat part of the bottom, so that the rims of the drainage holes are approximately horizontal.

To promote the drainage of the pot even further, it has been proposed in NL-C-1 0 18 022 to provide, on the rim of the drainage holes, a disrupting means protruding into this hole. It is assumed that a water film can form in the drainage holes which can thus close the drainage hole. The disrupting means should ensure that this water film is punctured, so that the water drips down and the drainage holes can thus let air back through. In practice, it is found that, when the drainage holes are plugged up with substrate, large drops are formed in the drainage holes, which hang fast at the substrate and have a broad base, as large as the drainage holes. When such a drop hangs from the substrate, the hole is thus completely closed to the air. Since the substrate is water-absorbent, while the plastic material of the pot is rather water-repellent, it is found in practice that the downwards protruding disrupting means fails to ensure that the drop is punctured (besides, the disrupting means is a static element) but that the drop rests against the disrupting means and is thus rather supported by this disrupting means instead. The question is thus whether such disrupting means indeed have a reliable effect on the drainage of the pot.

Another solution which has been proposed to promote the drainage through the drainage holes of a pot is described in NL-C-1 006 709 and also in DE-U-93 08 335. This solution consists in that so-called drop guides are provided below the drainage holes. These drop guides are intended to guide the drops so that the drops do not have to become as big before they are carried away. By guiding the drops, these must namely not be so heavy that they fall down by gravity. The effect of these drop guides can nevertheless be questioned, considering that in practice the drops form themselves centrally in the drainage holes, and thus do not make contact with the drop guides.

The invention also has the purpose of providing a pot of the type defined in the introduction, wherein the drainage of the pot through the drainage holes is promoted in another manner.

With this purpose, the pot according to the invention is characterized in that the lower bottom part forms a surface between the indentation and the sidewall, which undulates up and down over substantially its entire width in a direction around the central indentation, forming peaks, valleys and flanks, wherein at least a number of said drainage holes are located in one of said valleys and extend over the two adjacent flanks which form the respective valley.

In the pot according to the invention, the drainage is promoted in the first place by the bottom draining tangentially, that is, in a direction around the central indentation, towards the drainage holes, so that water cannot stagnate between the drainage holes anymore. Moreover, it is observed that the substrate which fills the pot, after being pressed or shaken, tends more to stick out below the rim of the drainage holes. The water that trickles downwards through the substrate arrives, because of the water-absorbing character of the substrate, at the parts of the substrate sticking out of the drainage hole, where drops are formed that hang only from the protruding part of the substrate. Because of the smaller base of these drops, they fall down more quickly, that means, in the form of smaller drops. Moreover, they do not block the drainage hole completely, so that the air can always enter the drainage hole so as to ventilate the substrate.

In a preferred embodiment of the pot according to the invention, the lower bottom part has, at the location of the drainage holes, a determined width measured from the indentation to the sidewall, and the drainage holes extend up to a determined distance from the sidewall and from the indentation, which distance is smaller than 40% and preferably smaller than 30% from the width of the lower bottom part.

This preferred embodiment offers the advantage that only a limited part of the valleys in the lower bottom part is not formed by a drainage hole. Only a very small portion of the substrate will thus be located in these wettest parts of the pot, the major part of the substrate draining effectively towards the drainage holes and in a limited measure towards these wettest parts. Since the wettest parts of the pot are placed effectively adjacent to the drainage holes, they will actually dry up relatively quickly after the water supply towards these lowest parts is ended.

In another preferred embodiment of the pot according to the invention, the drainage holes of the pot are located, when the pot is placed on a flat support, at a distance from their undersides to the flat support of less than 5 mm, preferably less than 3 mm.

When drops are formed under the drainage holes, they will come in contact with the support, and as a result flow out over the support. Such a short distance to the support also contributes therefore to an efficient drainage of the pot.

In yet another preferred embodiment of the pot according to the invention, at least some of the drainage holes provided in said valley join ventilation holes provided in the central indentation, so that two transitions are formed between the rim of the drainage hole and the rim of the ventilation hole connected to it, whereby, close to said transitions, the rims of the drainage holes and the rims of the ventilation holes connected thereto drain towards these transitions.

An advantage of this embodiment is that, when the substrate is pressed or shaken, the substrate that finds itself at the ventilation opening can slide further down, so that the substrate below in the drainage hole connected thereto will protrude faster from the bottom and thus ensure an efficient drop forming location. In other words, the downwards slide of the substrate is not hindered by any separation between the ventilation hole and the drainage hole located below.

Other advantages and particularities of the invention will be apparent from the following description of a preferred embodiment of a pot according to the invention. This description is also merely given as an example and is not intended to limit the scope of protection, as determined by the claims. The reference numbers indicated in the description relate to the following drawings, wherein:

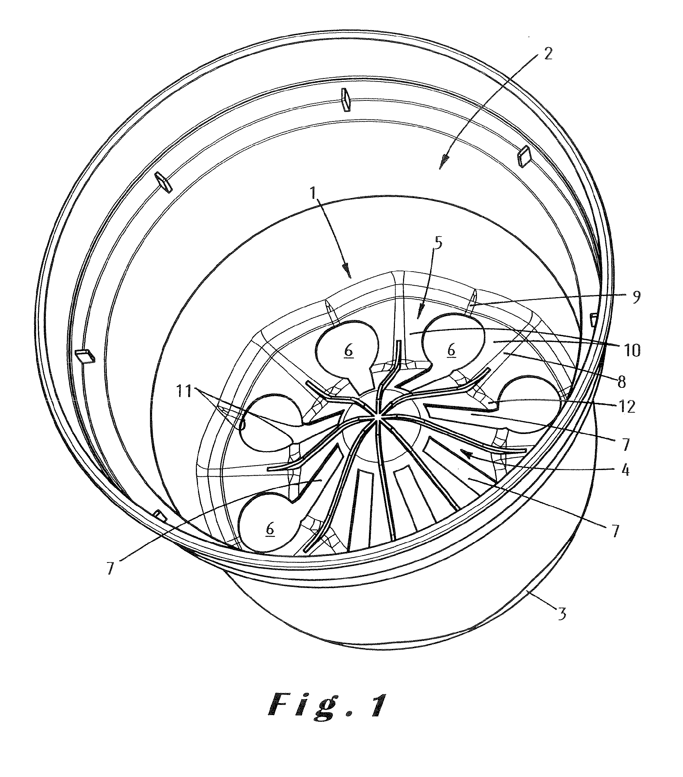

Figure 1 shows, in perspective, a view from above of a pot according to the invention;

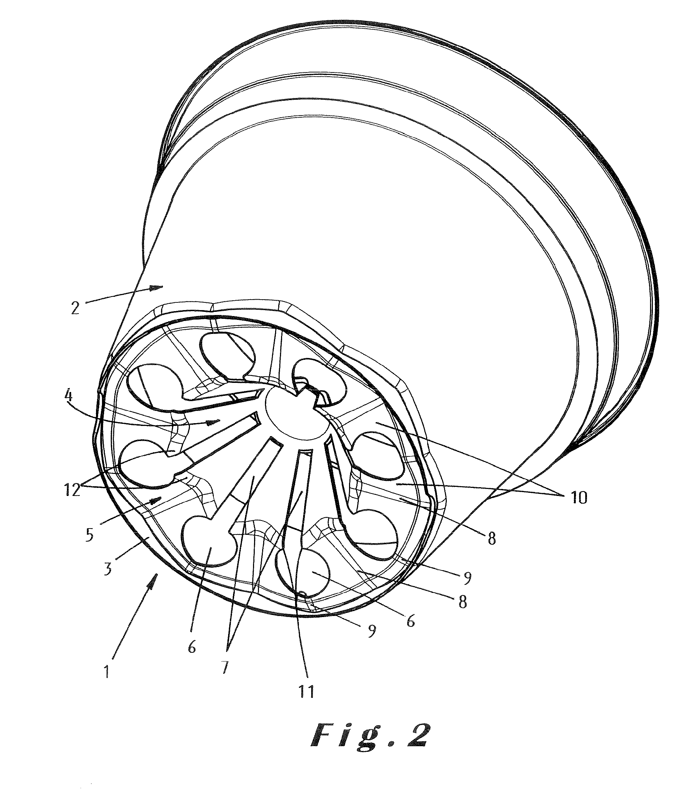

Figure 2 shows, in perspective, a view from below of the pot according to Figure 1;

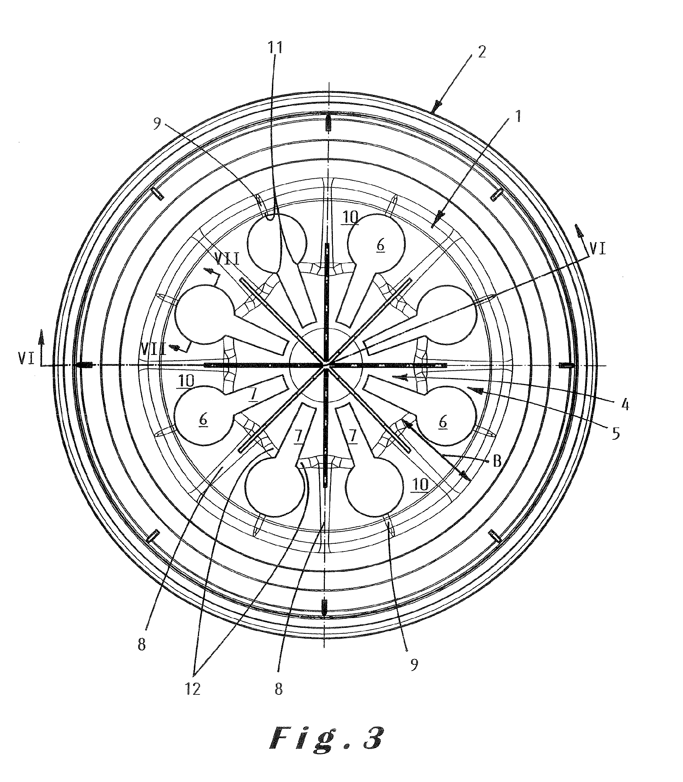

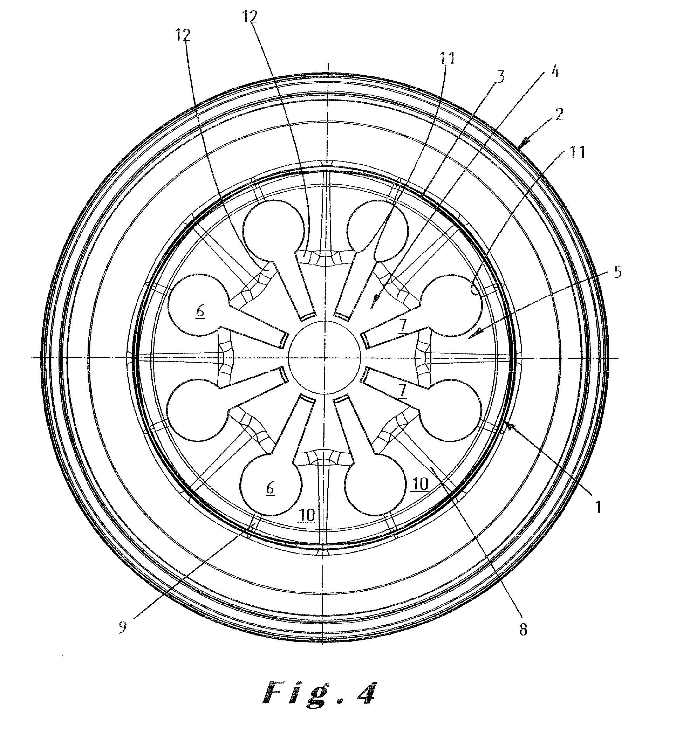

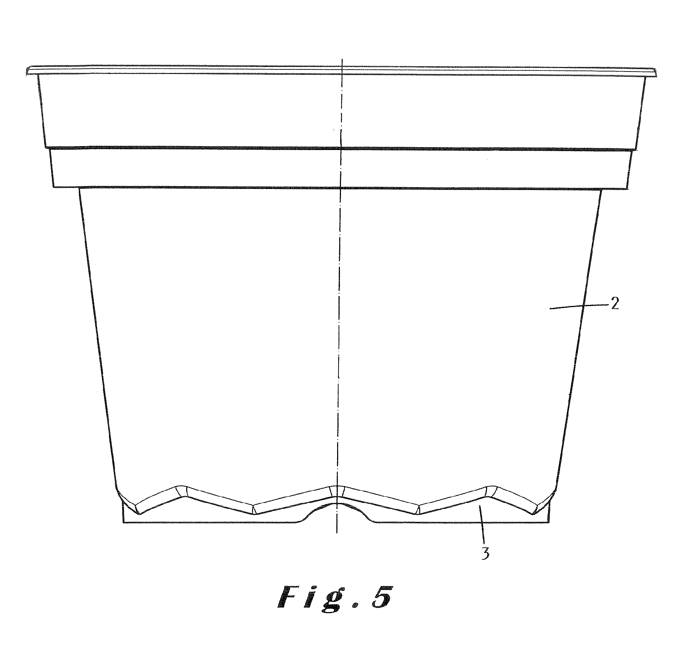

Figures 3, 4 and 5 show, respectively, a view from above, a view from below and a side view of the pot according to the previous Figures;

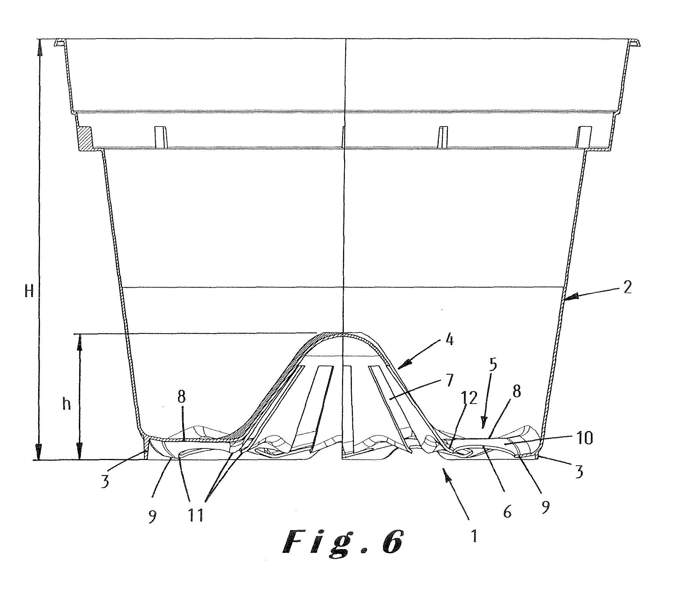

Figure 6 shows a longitudinal cut view along line VI-VI, as indicated in Figure 3;

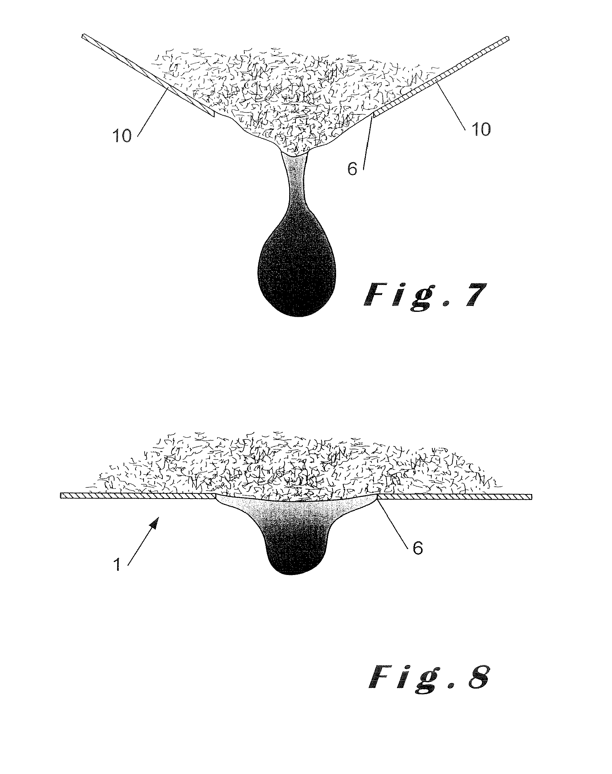

Figure 7 shows, in greater scale, a cut view through a drainage hole of the pot according to the invention, more precisely along line VII-VII in Figure 3, whereby the formation of drops in presence of a substrate in this pot is schematically illustrated; and
Figure 8 illustrates schematically the formation of drops in a flat drainage hole according to the state of the art.

The pot according to the invention is a pot that is suitable for growing several sorts of plants, in particular for growing plants with a root structure that develops itself relatively badly and/of a root structure that is sensitive to rot. The pot is particularly suitable for growing, for example, Saint Paulia, Azalea, pot roses, Kalanchoe and Spatiphyllum. The pot can be filled to this purpose with earth or with another substrate such as potting soil containing peat. It is important for the pot that it allows as quick a drainage of the substrate as possible, so that after being watered the roots can be optimally provided with oxygen as quickly as possible. This watering may happen either from above or laterally through a so-called tide-and-ebb system. The pots can be made from all sorts of materials and in all sorts of different shapes. In most cases they are manufactured from plastic, for example from polypropylene, and this by an injection moulding process. The pots can be, for example, round, square or square-round (square above and round below).

As shown in the drawings, the pot comprises a bottom 1, a sidewall 2 connected thereto and one or more support feet 3 below the bottom 1. These support feet 3 ensure that the bottom does not rest itself on the support, as a result of which the water can flow freely out of the pot. The bottom 1 of the pot is formed by a nearly central indentation 4 with a lower bottom part 5 around it which extends from the central indentation 4 up to the sidewall 2. To make the pot stackable, the sidewall 2 will widen upwards to some extent, while the indentation 4 will narrow upwards.

To drain the pot, drainage holes 6 are provided round the central indentation 4, in the lower bottom part 5, which in the shown embodiment, are placed in a circle. These drainage holes 6 occupy at least 5%, preferably at least 10% and most preferably at least 15% of the surface of the lower bottom part 5 around the central indentation. The drainage holes do however not only ensure the drainage of the pot, but also its ventilation. In the shown embodiment, the drainage holes 6 occupy approximately 28% of the surface of the lower bottom part 5. The drainage holes 6 can present all sorts of regular or irregular shapes such as round, oval, rectangular square, hexagonal, etc. As indicated in the drawings, they are preferably round. The surface of each one of the drainage holes is preferably larger than 30 mm², and more preferably larger than 50 mm². Round holes have preferably a diameter larger than 6 mm, more preferably larger than 8 mm and most preferably larger than 10 mm. In the 12 cm pot shown in the drawings, the round drainage holes have for example a diameter of approximately 13 mm.

The central indentation 4 is intended to promote the ventilation of the substrate. In a view from above (in flat projection) the indentation forms preferably more than 15%, more preferably more that 25%, but preferably less than 45% and more preferably less than 35% of the bottom surface. Moreover, the indentation extends in particular up to a height h of at least 15%, preferably up to a height h of at least 20% and most preferably up to a height h of at least 25% of the total height H of the pot. To promote the ventilation, the central indentation 4 is provided in the shown embodiment with ventilation holes 7. These ventilation holes 7 can be completely separate from the drainage holes 6, but in the shown embodiment the ventilation holes are elongated so that each ventilation hole 7 connects with a drainage hole 6. As it will be further described in detail, this connection is shaped so as to promote the drainage from the pot.

An important feature of the pot according to the invention is that the low bottom part 5, which extends between the indentation 4 and the sidewall 5, a surface forms which substantially undulates up and down over substantially its whole width (that is, from the central indentation up to the sidewall) in a direction around the central indentation to form peaks 8, valleys 9 and flanks 10. Preferably at least three, more preferably at least four and most preferably at least five valleys 10 are formed. The drainage holes 6 are provided in these valleys, preferably one in each valley, and extend over the two adjacent flanks 10. In this manner, the rims of the drainage holes 6 drain towards at least two lowest points 11. In the shown embodiment there are three points 11 towards which the rims of the drainage holes 6 drain, since these rims are interrupted by the ventilation holes 7.

Moreover, due to the undulating course of the lower bottom part 5, all the water that comes between the drainage holes 6 will flow towards these holes. The flanks 10 have preferably a slope percentage measured in the tangential direction between the drainage holes 6 and the adjacent peak 8 that, at the level of the drainage holes is overall higher than 10%, more preferably higher than 15% and most preferably higher than 20% (the slope percentage is the "average" percentage determined by taking the tangent of the angle formed between the horizontal plane and a line linking the valley and the adjacent peak). Moreover, the slope percentage of the flanks is preferably overall at the level of the drainage holes preferably lower than 400%, more preferably lower than 175% and most preferably lower than 100%. In the pot shown in the drawings, the slope percentage at the outer end of the drainage holes 6 is approximately 23% and at the inner end of these holes approximately 35% (due to the fact that at the outer side the distances between the valleys 9 and the peaks 8 are bigger, so that the flanks have a sort of helical shape). Eventually, the slope percentage at the outer end of the drainage holes could be increased by inclining the peaks 8 upwards towards the sidewall 2.

In the drawings, the surface of the lower bottom part 5 at the outer side of the drainage holes 6, in other words, along the sidewall 2, is inclined upwards towards this sidewall, so that, when the drainage holes 6 are not provided up to the sidewall, the water will flow from this sidewall 2 towards the holes 6. The surface of the lower bottom part 5 is also inclined upwards along the central indentation 4 from the lower bottom part 5 towards this central indentation 4. The bottom part 5 is inclined upwards, both along the sidewall 2 as along the indentation 4, with a slope that is smaller than the maximal slope of, respectively, the sidewall 2 (about 82° in the drawings) and the indentation 4 (about 55° in the drawings). The transition between the lower bottom part 5 and the sidewall 2 or the central indentation 4 happens thus at the place where the maximal slope angle is reached.

In order to avoid as much as possible having wet valley areas, the drainage holes 6 stretch preferably sufficiently far towards the sidewall 2 and towards the central indentation 4. If the lower bottom part 5 has a width B, measured between the indentation 4 and the sidewall 2, the drainage holes then preferably extend to a distance from the sidewall 2 and from the central indentation 4 which is less than 40% of the width B, and which is more preferably less than 30% of this width.

In the drawings the drainage holes 6 are circular and approximately extend up to the transition between the lower bottom part 5 and the central indentation 4, more precisely up to the part of the bottom inclined upwards towards the central indentation. The transitions between the rims of the drainage holes 6 and those of the ventilation holes 7 connected thereto are also each located near the transition between the lower bottom part 5 and the central indentation 4, more precisely also in the part of the bottom which is inclined upwards. Near these transitions, the rims of the drainage holes 6 as well as the rims of the ventilation holes 7 connected thereto drain towards these transitions.

Seen in a tangential direction, that is, in a direction tangential to a circle centred on the middle of the central indentation 4, the ventilation holes 7 in the shown pot are narrower than the drainage holes 6 to which they are connected. In this manner, a sort of gutters 12 are formed at the position of the transitions between the rims of both holes 6 and 7. Once the biggest part of the water has leaked out of the substrate, an accumulation of water will still remain at the position of these gutters 12, which can still trickle out of the substrate through these gutters 12. Even if the bottom already drains more strongly at the position of the gutters 12, since the flanks are steeper towards the middle of the pot than towards the outside, the plane of the lower bottom part 5 at the position of the gutters 12 is preferably bent downwards to further promote the drainage of the remaining water. Due to this, the substrate can also sag further, so that a protruding substrate part is formed in which efficient (smaller) drops form. This is however not shown in the drawings.

Finally, in the pot shown in the drawings, the drainage of the substrate is also promoted by that, when the pot is placed on a flat support, the drainage holes of the pot are located at a distance from their undersides to the flat support of less than 5 mm, preferably less than 3 mm. The substrate protruding downwards through the drainage holes 6 thus finds itself even closer to the flat support, so that, when drops form at this substrate, the drops quickly come in contact with the support and thus flow out. Therefore, even more water is extracted from the pot by the cohesive forces in the water.

The pot shown in the drawings is optimal for draining the substrate. The water flows always from any position in the bottom towards the drainage holes 6. Because of the three-dimensional form of these holes 6, the lowest part will mostly be formed by the downward protruding substrate. When water is supplied, drop formation will quickly take place in this protruding part of the substrate and, more particularly, small drops will be formed that drop off quickly and that do not completely close the drainage holes to air. Thus, good drainage will be combined with good ventilation, even more so due to the presence of the ventilation holes that extend up to the drier part of the substrate.

## Claims

1. Pot for growing a plant, wherein said pot comprises a bottom (1) and a sidewall (2) connected thereto, wherein the bottom (1) is formed by an approximately central indentation (4) with, around it, a lower bottom part (5) extending from the central indentation (4) to the sidewall (2) and having a surface of which at least 5% is occupied by drainage holes (6),
**characterised in that** the lower bottom part (5) between the indentation (4) and the sidewall (2) forms a surface which undulates up and down over substantially its entire width in a direction around the central indentation (4), forming peaks (8), valleys (9) and flanks (10), wherein at least a number of said drainage holes (6) are located in one of said valleys (9) and extend over the two adjacent flanks (10) which form the respective valley (9).

2. Pot according to claim 1, **characterised in that**, at the location of the drainage holes (6), the lower bottom part (5) has a width (B) measured from the indentation (4) to the sidewall (2), and the drainage holes (6) extend up to a determined distance from the sidewall (2) and from the indentation (4), which distance is smaller than 40% and preferably smaller than 30% from the width (B) of the lower bottom part (5).

3. Pot according to claims 1 or 2, **characterised in that**, when the pot is placed on a flat support, the drainage holes (6) are located at a distance, from their undersides to the flat support, of less than 5 mm, preferably less than 3 mm.

4. Pot according to one of the claims 1 to 3, **characterised in that** said flanks (10) have a slope percentage, measured in the tangential direction between the drainage holes (6) and the adjacent peak (8), higher than 10%, preferably higher than 15% and more preferably higher than 20%, wherein the slope percentage is preferably lower than 400%, more preferably lower than 175% and most preferably lower than 100%.

5. Pot according to one of the claims 1 to 4, **characterised in that** at least a number of the of the drainage holes (8) provided in said valleys (9) join ventilation holes (7) provided in the central indentation (4), so that two transitions are formed between the rim of the drainage hole (6) and the rim of the ventilation hole (7) connected to it, whereby, close to said transitions, the rims of the drainage holes (6) and the rims of the ventilation holes (7) connected thereto drain towards these transitions.

6. Pot according to claim 5, **characterised in that** the drainage holes (6) which are joined by a ventilation hole (7) extend substantially to the transition between the lower bottom part (5) and the indentation (4), wherein the two transitions between the rim of the drainage hole (6) and the rim of the ventilation hole (7) are each located close to the transition between the lower bottom part (5) and the indentation (4).

7. Pot according to claim 6, **characterised in that** the surface of the lower bottom part (5) is bent downwards at the location of the two transitions between the rim of the drainage hole (6) and the rim of the ventilation hole (7) connected thereto.

8. Pot according to one of the claims 5 to 7, **characterised in that** the ventilation holes (7) that join a drainage hole (6) are narrower, in a tangential direction, than the drainage hole (6) which they join.

9. Pot according to one of the claims 1 to 8, **characterised in that** the surface of the lower bottom part (5) presents at least three, preferably at least four and more preferably at least five valleys (9).

10. Pot according to one of the claims 1 to 9, **characterised in that** each of the valleys (9) is provided with at least one of said drainage holes (6).

11. Pot according to one of the claims 1 to 10, **characterised in that**, in a view from above, the indentation forms more than 15%, and preferably more that 25%, but less than 45% and preferably less than 35% of the bottom surface.

12. Pot according to one of the claims 1 to 11, **characterised in that** it has a total height (H) and **in that** the indentation (4) extends up to a height (h) of at least 15%, preferably up to a height (h) of at least 20% and more preferably up to a height (h) of at least 25% of this total height (H).

13. Pot according to one of the claims 1 to 12, **characterised in that** the surface of the lower bottom part (5) is occupied to at least 10%, preferably to at least 15%, by said drainage holes (6).

14. Pot according to one of the claims 1 to 13, **characterised in that** the surface of the lower bottom part (5) along the sidewall (2) is inclined upwards towards that sidewall (2), with a slope that is smaller than the maximum slope of the sidewall (2).

15. Pot according to one of the claims 1 to 14, **characterised in that** the surface of the lower bottom part (5) along the indentation (4) is inclined upwards towards this indentation (4) with a slope that is smaller than the maximum slope of the indentation (4).

16. Pot according to one of the claims 1 to 15, **characterised in that** said drainage holes (6) are substantially round and have a diameter larger than 6 mm, preferably larger than 8 mm and more preferably larger than 10 mm.
